# EUROPEAN PATENT SPECIFICATION

(11) **EP 3 985 830 B1**
(45) Date of publication and mention of the grant of the patent: **09.12.2026**
(21) Application number: 21200372.7
(22) Date of filing: 30.09.2021
(51) Int. Cl.: H02J 7/00, B05B 11/00, B05C 17/005, H02J 7/80

(54) **ADHESIVE DISPENSING SYSTEM**
KLEBSTOFFAUSGABESYSTEM
SYSTÈME DE DISTRIBUTION D'ADHÉSIF

(30) Priority: 06.10.2020 US 202017064211
(43) Date of publication of application: 20.04.2022
(73) Proprietor: Techtronic Cordless GP, Anderson, SC 29621 (US)
(72) Inventor: SMITH, Isiah Daniel, Greenville, 29607 (US); MOYLAN, Julia H., Easley, 29642 (US); CHANDLER, Carl N., Greenville, 29605 (US); WRIGHT, Neil, Greenville, 29607 (US); CAUSEY, Brandon, Greenville, 29601 (US); SANDOVAL, Gabriel James, Piedmont, 29673 (US); OSTERMAYER, Margarete, Taylors, 29687 (US); THOMAS, Gian S.E., Greenville, 29607 (US); HERNANDEZ, Daniel, Greenville, 29605 (US); SCHMIDT, Nicholas B., Greenville, 29611 (US); ELLIOTT, Halle, Greenville, 29607 (US)
(74) Representative: Meissner Bolte Partnerschaft mbB

(56) References cited:
- KR-A- 20130 026 353
- US-A1- 2005 275 378
- US-A1- 2006 191 957
- US-A1- 2019 222 044
- US-A1- 2019 350 391

## Description

### FIELD

The present application relates to an adhesive dispensing system according to the preamble of claim 1 and a method for controlling one or more illuminate devices in an adhesive dispensing system. Such a system includes a hand-held adhesive dispenser, commonly known as glue gun that heat an adhesive for controlled discharge.

US 2006/191957 A1 discloses such a system and refers to a glue gun including a heating assembly, an advancement mechanism, a trigger, a heat sink, and a power source. The apparatus may additionally include one or more LEDs for providing either alerts to the user or illumination of the object that is to receive the liquefied material. The apparatus may include a printed circuit board for providing heating control. The apparatus may additionally include one or more tilt sensors. The power source is a battery pack, selectively attached to the bottom of the grip portion by techniques known in the hand tool art. Two of the LEDs may be provided to indicate to the user when the apparatus is in the power save mode and a light disposed on a barrel portion of the apparatus emits light onto the area of discharged adhesive.

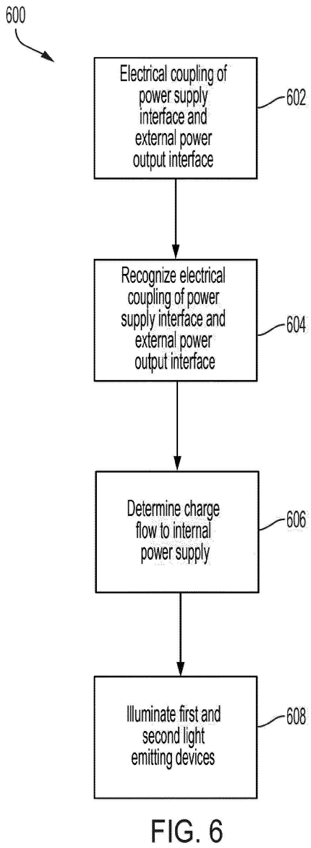

KR 2013 0026353 A relates to an apparatus and method for communicating in a wireless power transmission system. With regard to Fig. 6, the power source may be implemented as a pad type. An LED display can indicate in color that the source is operating in the standby mode. The LED display may indicate that the source is operating in the connected mode in a different color. The LED display may indicate that the source is operating in the charging mode in another color. The LED display can distinguish between the case where charging is in progress and the case where charging is completed in different colors. A target (obviously a mobile phone) may receive power from the source with the start of the charging process when it is located at the radio power transmission region of the source. The battery charge status indication of the target indicates the power charged from the source.

US 2019/350391 A1 refers to an apparatus for heating and dispensing a normally viscous or at least partially solid edible food substance, e.g. butter. The apparatus includes a dispensing unit that is removably and electrically coupled to the base for recharging the dispenser batter via electrical connectors. The base includes a charging base indicator light which may be an LED that is mounted on a pin board to provide the operational status of the base (e.g. power on, dispensing unit charging, etc.). An on/off switch may be provided to power the unit on or off. The dispensing unit may further include a status indication system which provides system status information to the user about the various operational stages of the unit. The status indication system may be configured to provide visual and/or audible information and alerts to the user. A visual status indication system may also be used and includes a control light display comprising a status light board including electronic circuitry and one or more color-changing status lights. The status lights may be used to provide temperature-based information to the user, numerous variations of the status lights operation and signaling may be used including different and/or additional, but unknown status light indications.

### SUMMARY

In one embodiment, an adhesive dispensing system including an adhesive dispensing device and a charger base is described. The adhesive dispensing device includes a first light emitting device, a handle, a power source, and a power supply interface. The charger base includes a second light emitting device, an interface formed for receiving the adhesive dispensing device, an external power output interface, and a power supply circuit. The interface formed for receiving the adhesive dispensing device is configured to mate with the handle. The external power output interface is configured to electrically couple to the power supply interface of the adhesive dispensing device. The power supply circuit is coupled to the external power output interface and is configured to provide power to the external power output interface. The first light emitting device is configured to illuminate in response to power being provided to the power supply interface from the power supply circuit. The second light emitting device is configured to illuminate in response to power being provided to the power supply circuit from the external power output interface.

In another embodiment, a method for controlling one or more illuminate devices in an adhesive dispensing system is described. An adhesive dispensing device is electrically coupled to an adhesive dispensing device. The electrical coupling of the external power output interface and the power supply interface is recognized. In response to the recognition of the electrical coupling of the external power output interface and the power supply interface, at least one of a first light emitting device within the adhesive dispensing device and a second light emitting device within the charger base is illuminated.

In yet another embodiment, an adhesive dispensing system including an adhesive dispensing device and a charger base is described. The adhesive dispensing device includes a first light emitting device, a handle, a power source, a power supply interface, and a control circuit. The control circuit is configured to control the first light emitting device. The charger base includes a second light emitting device, an interface formed for receiving the adhesive dispensing device, an external power output interface, and a power supply circuit. The interface formed for receiving the adhesive dispensing device is configured to mate with the handle. The power supply circuit is coupled to the external power output interface and is configured to electrically couple to the power supply interface of the adhesive dispensing device based on the adhesive dispensing device being received in the interface. The first light emitting device is configured to illuminate in response to power being provided to the power supply interface from the power supply circuit. The second light emitting device is configured to illuminate in response to power being provided from the power supply circuit to the external power output interface.

Other aspects of the disclosed embodiments will become apparent by consideration of the detailed description and accompanying drawings.

### BRIEF DESCRIPTION OF THE DRAWINGS

FIG. 1 is a perspective view of a glue gun and base according to some embodiments.
FIG. 2 is a side view of the glue gun of FIG. 1, according to some embodiments.
FIG. 3 is a perspective view of the base of the glue gun of FIG. 1.
FIG. 4 is a block diagram illustrating an electrical circuit of the glue gun of FIG. 1, according to some embodiments.
FIG. 5 is a block diagram illustrating an electrical circuit of the base of FIG. 1, according to some embodiments.
FIG. 6 is a flowchart illustrating a process for controlling the illumination of a light source on an adhesive dispenser, according to some embodiments.
FIG. 7 is a flowchart illustrating a process for controlling the illumination and color of illumination of a light source on an adhesive dispenser, according to some embodiments.

### DETAILED DESCRIPTION

Before any aspects of the herein disclosed technology are explained in detail, it is to be understood that the described embodiments are not limited in their application to the details of construction and the arrangement of components set forth in the following description or illustrated in the following drawings. The herein described embodiments are capable of other configurations and of being practiced or of being carried out in various ways.

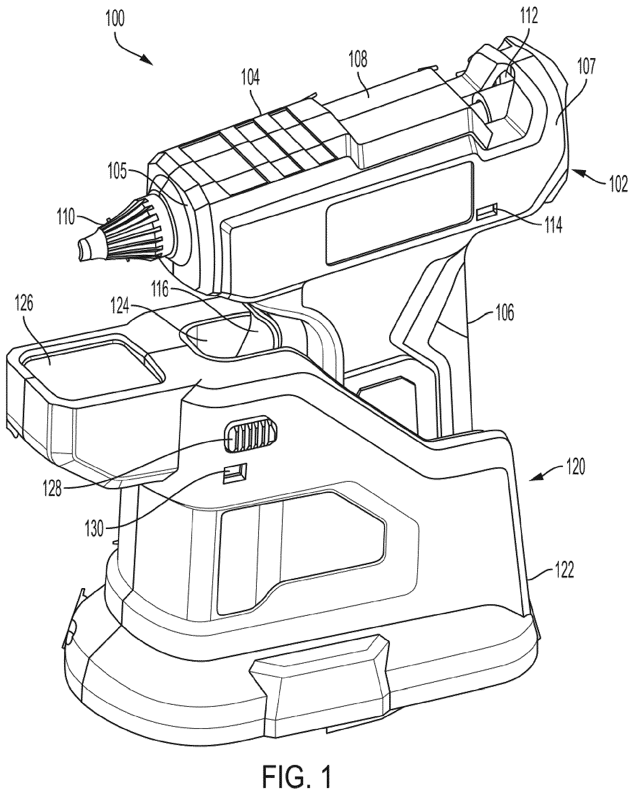

FIG. 1 illustrates an adhesive dispensing system 100 according to one embodiment of the present disclosure. The adhesive dispensing system 100 includes an adhesive dispensing device 102 and a charger base 120.

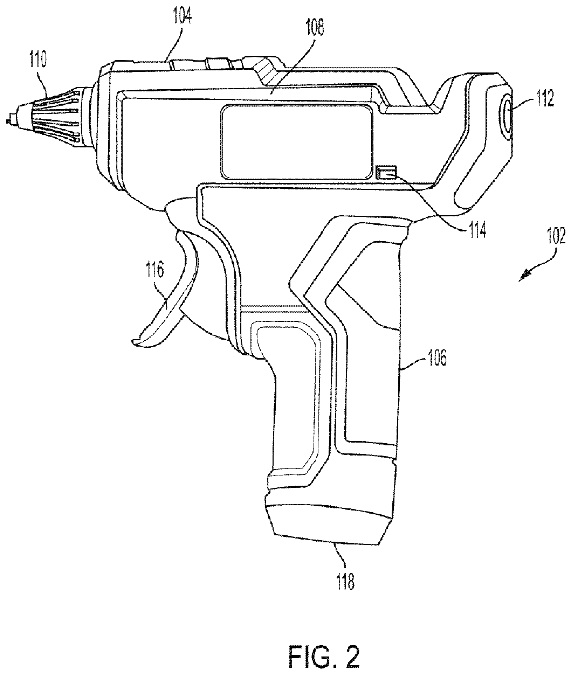

FIG. 2 illustrates the adhesive dispensing device 102 including a housing 104 having both a handle 106 and a barrel portion 108. The housing 104 has a first end 105 and a second end 107. The first end 105 is opposite of the second end 107 along the same lateral axis as the barrel portion 108. The barrel portion 108 is positioned generally atop the handle 106. A dispensing tip 110 is provided at the first end 105 of the housing 104 for dispensing liquid adhesive from the adhesive dispensing device 102. At the second end 107 of the housing 104, an aperture 112 is provided for receiving an adhesive. In one example, the adhesive is a solid adhesive. However, in other examples, the adhesive may be a liquid, such as a gel.

The housing 104 also includes a first light emitting device 114. In one embodiment, the first light emitting device 114 is a light emitting diode (LED). In some examples, the first light emitting device 114 includes one LED element. However, in other examples, the first light emitting device 114 may include multiple LED elements. For example, the first light emitting device 114 may include multiple LED elements configured to emit light at different wavelengths (i.e. colors).

The adhesive dispensing device 102 also includes a trigger 116 that is movably coupled to the handle 106. A power supply interface 118 is provided at the bottom end of the handle 106. The power supply interface 118 is configured to receive power from an external source, such as via the charger base 120. In one example, the power supply interface 118 is configured to receive a direct-current (DC) voltage, which can be used to supply power to one or more component of the adhesive dispensing device 102, as will be described below. However, in other embodiments, the power supply interface 118 is configured to receive an alternating current (AC) voltage.

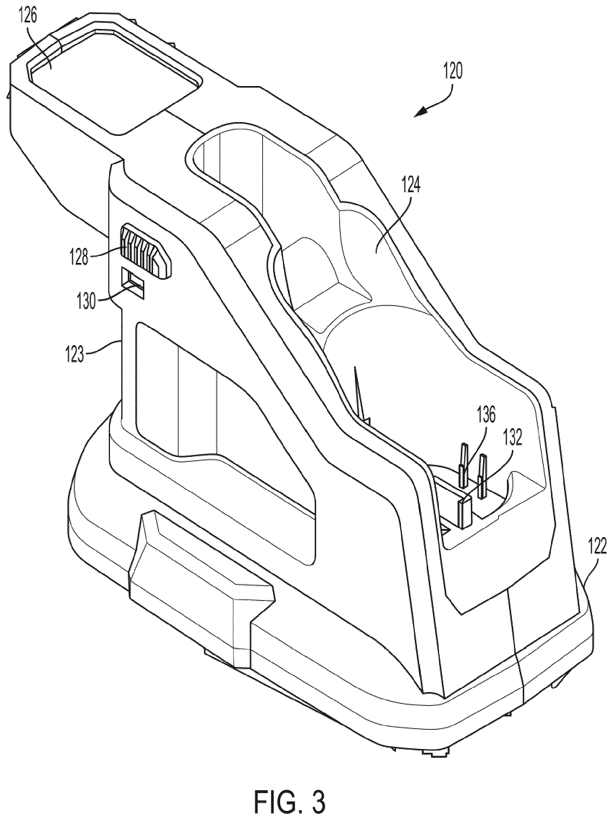

FIG. 3 illustrates the charger base 120 including a base housing 122. The base housing 122 includes an interface 124, a drip shelf 126, a switch 128, a second light emitting device 130, and an external power output interface 132. The interface 124 is configured to receive and mate with the handle 106 of the adhesive dispensing device 102. The interface 124 allows the adhesive dispensing device 102 to be supported in an upright position as shown in FIG. 1. The interface 124 mates with the handle 106 of the adhesive dispensing device 102 to supply power to the adhesive dispensing device 102 through the electrical coupling of the power supply interface 118 and the external power output interface 132, as will be described below. In one embodiment, the interface 124 may include one or more electrical contacts 136, which are configured to interface with the power supply interface 118 of the adhesive dispensing device 102. The drip shelf 126 is provided at the forward end 123 of the base housing 122 and is generally parallel to the dispensing tip 110. The drip shelf 126 provides a surface to collect adhesive that is expelled from the dispensing tip 110 when the adhesive dispensing device 102 is received by the interface 124.

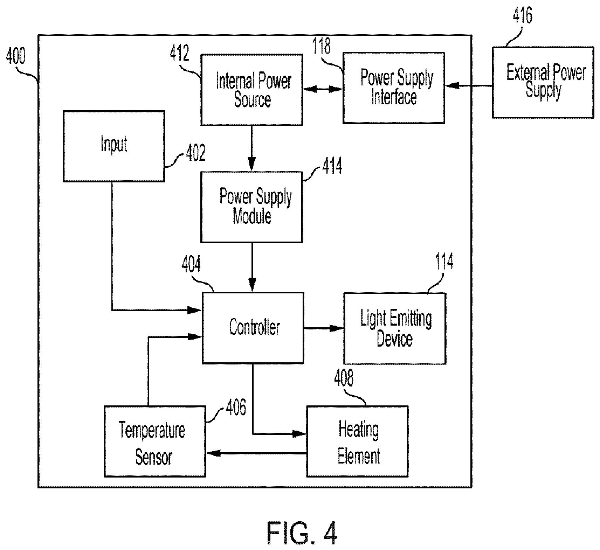

FIG. 4 illustrates an electrical schematic of the adhesive dispensing device 102, according to some embodiments. As shown in FIG. 4 the adhesive dispensing device 102 includes a control system 400. The control system 400 includes an input 402, a controller 404, a temperature sensor 406, a heating element 408, the first light emitting device 114, an internal power source 412, a power supply module 414, a power supply interface 118, and an external power supply 416.

The controller 404 includes electrical and electronic components that provide power, operational control, and protection to the components and modules within the control system 400 and/or the adhesive dispensing device 102. Specifically, the controller 404 may include, among other things, a processing unit (e.g., a microprocessor, a microcontroller, electronic processor, electronic controller, or another suitable programmable device), a memory, sensors, input circuits, and output circuits. The controller 404 interfaces with the power supply module 414 to receive data regarding the flow of power to the internal power source 412. The controller 404 may receive an input via the input 402. In one embodiment, the input 402 may be when the trigger 116 is actuated. In another embodiment, the input 402 may be when a power switch (not shown) is switched to an "on" position. When an input is received by the controller 404, the controller 404 controls the heating element 408 such that the heating element 408 generates heat. In some embodiments, the controller 404 may control how much power flows to the heating element 408 to control the amount of heat generated by the heating device. For example, the controller 404 may control the amount of power provided to the heating element 408 by controlling one or more power circuits, such as power circuits utilizing solid state switching control (e.g. a MOSFET switched power circuit). In other embodiments, other power circuits, such as relays, are used to control the flow of power to the heating element 408. or other power circuit devices.

The controller 404 is electrically coupled to the temperature sensor 406 to receive temperature data associated with the heating element 408. In one embodiment, the temperature sensor 406 provides an analog signal to the controller 404 representing the temperature data. In other embodiments, the temperature sensor 406 may provide one or more digital signals to the controller 404 to represent the temperature data. The temperature sensor 406 is configured to interface with the heating element 408 to determine a temperature of one or more portions of the heating element 408. In some embodiments, a temperature of the heating element is determined without the use of a temperature sensor. For example, the controller 404 may be configured to calculate a temperature of the heating element 408 based on an amount of current provided to the heating element. The current provided to the heating element may be the current output from the internal power source, which is communicated to the controller 404, or another sensed current. In some examples, the controller 404 may sense a change in current though a temperature-dependent resistor, such as a Positive Temperature Coefficient ("PTC") thermistor (not shown), that corresponds to a change in temperature of the heating element 408. The above examples are for exemplary purposes only, and other configurations or components can be used to determine a temperature of the heating element without the use of a temperature sensor configured to provide temperature data to the controller 404.

In one embodiment, the heating element 408 is configured to, upon activation by the controller 404, heat a solid adhesive to a temperature that converts it to a liquid adhesive, which may then be dispensed through the dispensing tip 110. Activation by the controller 404 occurs when the controller 404 receives an input 402, such as an input from the trigger 116. In one embodiment, the heating element 408 heats the dispensing tip 110, which may then heat the solid adhesive as it is forced into the dispensing tip 110 by actuation of the trigger 116.

As shown in FIG. 4, the power supply interface 118 is also electrically coupled to an internal power source 412. The internal power source 412 provides power to the adhesive dispensing device 102. In one embodiment, the internal power source 412 is a rechargeable battery, such as a rechargeable Lithium-Ion (Li-lon) battery. However, in other embodiments the internal power source 412 may be other rechargeable battery types, such a lead-acid, Nickle-Cadmium, etc. In one embodiment, the internal power source 412 may receive power via the power supply interface 118. The internal power source 412 receives power via the power supply interface 118 when the power supply interface 118 is electrically coupled to the external power supply 416. The external power supply 416 may be power that is received from the external power output interface 132. Power from the external power output interface 132 received via the power supply interface 118 may charge the internal power source 412. The internal power source 412 is coupled to the power supply module 414, which is in communication with the controller 404. The power supply module 414 communicates to the controller 404 that an electrical connection with the charger base 120 has been established and that power is flowing to the internal power source 412. The internal power source 412 provides power to the controller 404. In other embodiments, the internal power source 412 may provide power to the power supply module 414, which may then provide power to one or more components of the control system 400, such as the controller 404.

In one embodiment, the controller 404 is configured to control at least the first light emitting device 114 of the adhesive dispensing device 102. The first light emitting device 114 of the adhesive dispensing device 102 and the second light emitting device 130 of the charger base 120 may be configured to illuminate when the power supply interface 118 is electrically coupled to an external power supply 416. In one example, the first light emitting device 114 of the adhesive dispensing device 102 and the second light emitting device 130 of the charger base 120 illuminate using the same color. However, in other examples, the first light emitting device 114 of the adhesive dispensing device 102 and the second light emitting device 130 of the charger base 120 illuminate using different colors. Example colors may include red, blue, green, white, and the like.

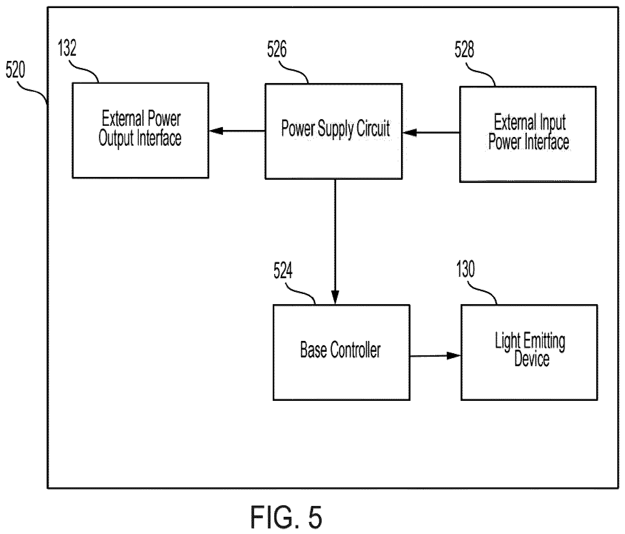

FIG. 5 illustrates an electrical schematic of the charger base 120, according to some embodiments. As shown in FIG. 5, the charger base 120 includes a control system 520. In one embodiment, the charger base 120 includes an external power output interface 132, a base controller 524, one or more second light emitting device 130, a power supply circuit 526, and an external input power interface 528.

The external input power interface 528 can be one of a battery, an AC power source (e.g. utility power), a DC power source (e.g. a rectified AC signal), etc. Power is provided to the control system 520 via the external input power interface 528 and is regulated by the power supply circuit 526. The power supply circuit 526 is coupled to the base controller 524 and the external power output interface 132. In one embodiment, the base controller 524 is configured to control the illumination of the second light emitting device 130, as further described below.

In one embodiment, the external power output interface 132 is configured to interface with an external device, such as the adhesive dispensing device 102, described above. The external power output interface 132 interfaces with the power supply interface 118 of the adhesive dispensing device 102 via an electrical connection. For example, electrical contacts 136 on the charger base 120 may interface with one or more electrical contacts on the adhesive dispensing device 102. The electrical connection allows for power to flow from the charger base 120 to the adhesive dispensing device 102. The electrical connection is recognized by the power supply module 414. In some examples the power supply module 414 may act as a sensor. The power supply module 414 may be in communication with sensors that sense the electrical connection. The sensors may be a voltage sensor, a current sensor, etc. In one embodiment, the power supply module 414 recognizes the flow of power to the internal power source 412 and communicates to the controller 404 that power is flowing.

FIG. 6 illustrates a flowchart of a process 600 for controlling one or more light emitting devices associated with an adhesive dispensing system, such as the adhesive dispensing system 100 described above. At block 602, the interface 124 on the charger base 120 receives the handle 106 of the adhesive dispensing device 102. The power supply interface 118 is brought into electrical contact with the external power output interface 132, via the electrical contacts 136 described above. At block 604, the control system 400 of the adhesive dispensing device 102 and the control system 520 of the charger base 120 recognize the electrical coupling of the power supply interface 118 and the external power output interface 132. The controller 404 recognizes the electrical coupling through the power supply module 414, as described above. The base controller 524 recognizes the electrical coupling through the power supply circuit 526 which communicates that electrical coupling has occurred to the base controller 524. At block 606, the control system 400 determines that charge is flowing to the internal power source 412. The power supply module 414 communicates the determination of charge flow to the controller 404. At block 608, the controller 404 and the base controller 524 are configured to illuminate the first light emitting device 114 and the second light emitting device 130, respectively, in response to determining that there is charge flowing to the internal power source 412. In one embodiment, the controller 404 communicates the determined power flow to the base controller 524. For example, controller 404 may communicate to the base controller 424 via a wired connection, such as via electrical contacts 136. However, in some examples, the communication between the controller 404 and the base controller 524 may be done via a wireless communication protocol, such as Bluetooth, RF, Wi-Fi, etc.

In another embodiment, the base controller 524 may determine that charge is flowing to the internal power source 412.

In yet another embodiment, the controller 404 and the base controller 524 are configured to illuminate the first light emitting device 114 and the second light emitting device 130, respectively, in response to determining that there is charge flowing to the internal power source 412 and in response to the base controller 524 determining that the power supply circuit 526 is supplying power to the external power output interface 132.

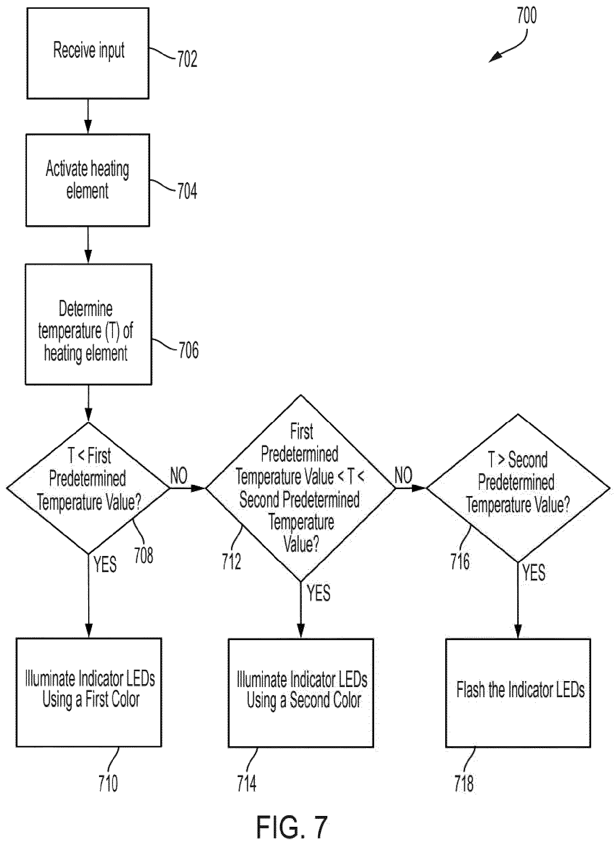

FIG. 7 is a flowchart illustrating a process 700 for illuminating one or more of the first light emitting device 114 and the second light emitting device 130 based on a sensed temperature. At block 702, the controller 404 receives an input 402. In one embodiment, the input 402 may be received when the trigger 116 is actuated. In another embodiment, the input 402 may be received when a power switch (not shown) is switched to the "on" position. At block 704, the controller 404 activates the heating element 408. When activated, the heating element 408 emits heat to change the solid adhesive to liquid as the solid adhesive comes into proximity of the heating element 408. At block 706, the controller 404 determines a temperature of the heating element 408. In one embodiment, the controller 404 receives temperature data from the temperature sensor 406 indicating the temperature of the heating element 408. In some examples, the controller 404 is configured to calculate a temperature of the heating element 408 based on an amount of current provided to the heating element 404. The current provided to the heating element may be the current output from the internal power source, which is communicated to the controller 404, or another sensed current. In some examples, the controller 404 may sense a change in current though a temperature-dependent resistor, such as a PTC thermistor (not shown), that corresponds to a change in temperature of the heating element 408.

The controller 404 is configured to interpret the determined temperature data by comparing it to a first predetermined temperature value, as described in block 708. In response to the temperature data being less than the first predetermined temperature value, then the process proceeds to block 710. In response to the temperature data being greater than the first predetermined temperature value, the process proceeds to block 712. At block 710, in response to the controller 404 interpreting the temperature data as being below the first predetermined temperature value and the controller 404 communicating the determined temperature to the base controller 524, the controller 404 and the base controller 524 are configured to control at least one of the first light emitting device 114 and the second light emitting device 130 to produce light having a first color. In one embodiment, the controller 404 may communicate to the base controller 424 via a wired connection, such as via electrical contacts 136. However, in some examples, the communication between the controller 404 and the base controller 524 may be done via a wireless communication protocol, such as Bluetooth, RF, Wi-Fi, etc. In one embodiment, the first color is blue. However, other colors may be used for the first color, such as red, purple, green, etc.

If the process 700 does not proceed to block 710, then the process 700 proceeds to block 712. At block 712, the controller 404 interprets the determined temperature data to see if the temperature is between the first predetermined temperature value and the second predetermined temperature value. If the temperature data meets the criteria of block 712, then the process 700 proceeds to block 714. If the temperature data does not meet the criteria of block 712, then the process 700 proceeds to block 716. If the process 700 proceeds to block 714, at least one of the first light emitting device 114 and the second light emitting device 130 illuminate to a second color. In one embodiment, the second color is yellow, indicating a temperature between the first predetermined temperature value and the second predetermined temperature value.

If the process 700 does not proceed to block 714, then the process 700 proceeds to block 716. At block 716, the controller 404 interprets the determined temperature data to see that the received temperature data is greater than the second predetermined temperature value. At block 718, in response to the controller 404 interpreting temperature data from the temperature sensor 406 that is above the second predetermined temperature value, at least one of the first light emitting device 114 and the second light emitting device 130 alternate between an ON state and an OFF state (i.e. flashing). Alternating between an ON state and an OFF state may indicate an overheated state of the adhesive dispensing device 102. In one embodiment, the flashing illumination may be of the color white.

In one embodiment, the first temperature may be 120° Celsius. However, temperatures of more than 120° Celsius and less than 120° Celsius are also contemplated. The second temperature may be 140° Celsius. However, temperatures of more than 140° Celsius and less than 140° Celsius are also contemplated.

Various features and advantages of the invention are set forth in the following claims.

## Claims

1. An adhesive dispensing system (100) comprising:
an adhesive dispensing device (102) comprising:
a first light emitting device (114);
a handle (106);
a power source; and
a power supply interface (118); **characterized in that** the adhesive dispensing system (100) further comprises:
a charger base (120) comprising:
a second light emitting device (130);
an interface (124) formed for receiving the adhesive dispensing device (102), the interface (124) configured to mate with the handle (106);
an external power output interface (132) configured to electrically couple to the power supply interface (118) of the adhesive dispensing device (102);
a power supply circuit (526) coupled to the external power output interface (132), and
configured to provide power to the external power output interface (132);
wherein the first light emitting device (114) is configured to illuminate in response to power being provided to the power supply interface (118) from the power supply circuit (526); and
wherein the second light emitting device (130) is configured to illuminate in response to power being provided from the power supply circuit (526) to the external power output interface (132).

2. The adhesive dispensing system (100) of claim 1, wherein the adhesive dispensing device (102) further comprises:
a control circuit; and
a temperature sensor (406) that is communicatively coupled to the control circuit.

3. The adhesive dispensing system (100) of claim 2, wherein the temperature sensor (406) is configured to detect a temperature of a heating element (408) of the adhesive dispensing device (102) and communicate the detected temperature to the control circuit.

4. The adhesive dispensing system (100) of claim 2, wherein the control circuit is configured to control at least one of the first light emitting devices (114) and the second light emitting devices (130) in response to receiving temperature data from the temperature sensor (406).

5. The adhesive dispensing system (100) of claim 3, wherein the first light emitting device (114) and the second light emitting device (130) are multi-colored light emitting devices.

6. The adhesive dispensing system (100) of claim 5, wherein the first light emitting device (114) outputs a first color in response to a first detected temperature.

7. The adhesive dispensing system (100) of claim 6, wherein the first detected temperature is less than 120 degrees Celsius.

8. The adhesive dispensing system (100) of claim 5, wherein the first light emitting device (114) outputs a second color indicating a second detected temperature.

9. The adhesive dispensing system (100) of claim 7, wherein the second detected temperature is in the range of 120 degrees Celsius to 140 degrees Celsius.

10. The adhesive dispensing system (100) of claim 1, wherein the first light emitting device (114) and the second light emitting device (130) are LEDs.

11. A method for controlling one or more light emitting devices (114, 130) in an adhesive dispensing system (100) according to any one of claims 1-10, the method comprising:
electrically coupling an adhesive dispending device and a charger base (120);
determining a power flow between an external power output interface (132) of the charger base (120) and a power supply interface (118) of the adhesive dispensing device (102); and
in response to determining the power flow between the external power output interface (132) and the power supply interface (118), illuminating at least one of a first light emitting device (114) coupled to the adhesive dispensing device (102) and a second light emitting device (130) coupled to the charger base (120).

12. The method of claim 11, wherein the adhesive dispensing device (102) includes a temperature sensor (406) that is coupled to a control circuit of the adhesive dispensing device (102), wherein the temperature sensor (406) is configured to detect a temperature of a heating element (408) of the adhesive dispensing device (102).

13. The method of claim 12, further comprising controlling, via the control circuit, an output of at least one of the first light emitting device (114) and the second light emitting device (130) in response to receiving temperature data from the temperature sensor (406).

14. The method of claim 13, wherein the first light emitting device (114) and the second light emitting device (130) are multi-colored light emitting devices.

15. The method of claim 14, further comprising controlling, via the control circuit, one of the first light emitting device (114) and the second light emitting device (130) to output a first color light to indicate a first detected temperature.

16. The method of claim 15, wherein the first temperature is less than 120 degrees Celsius.

17. The method of claim 14, further comprising controlling, via the control circuit, one of the first light emitting device (114) and the second light emitting device (130) to output a second color light to indicate a second detected temperature.

18. The method of claim 17, wherein the second detected temperature is in the range of 120 degrees Celsius to 140 degrees Celsius.

19. The adhesive dispensing system (100) of claim 1, wherein
the adhesive dispensing device (102) further comprises:
a control circuit configured to control the first light emitting device (114); and
wherein the external power output interface (132) is configured to electrically couple to the power supply interface (118) of the adhesive dispensing device (102) based on the adhesive dispensing device (102) being received in the interface (124).

20. The adhesive dispensing system (100) of claim 19, wherein the control circuit is configured to communicate a command to the charger base (120) to illuminate the second light emitting device (130) in response to power being provided to the power supply.

## Patentansprüche

1. Klebstoffabgabesystem (100), umfassend:
eine Klebstoffabgabevorrichtung (102), umfassend:
eine erste lichtemittierende Vorrichtung (114);
einen Griff (106);
eine Energiequelle; und
eine Energieversorgungsschnittstelle (118); **dadurch gekennzeichnet, dass** das Klebstoffabgabesystem (100) ferner umfasst:
eine Ladeeinrichtungsbasis (120), umfassend:
eine zweite lichtemittierende Vorrichtung (130);
eine Schnittstelle (124), die zum Aufnehmen der Klebstoffabgabevorrichtung (102) gebildet ist, wobei die Schnittstelle (124) dazu ausgelegt ist, mit dem Griff (106) zusammenzupassen;
eine externe Energieausgangsschnittstelle (132), die dazu ausgelegt ist, elektrisch mit der Energieversorgungsschnittstelle (118) der Klebstoffabgabevorrichtung (102) zu koppeln;
eine Energieversorgungsschaltung (526), die mit der externen Energieausgangsschnittstelle (132) gekoppelt und dazu ausgelegt ist, der externen Energieausgangsschnittstelle (132) Energie bereitzustellen;
wobei die erste lichtemittierende Vorrichtung (114) dazu ausgelegt ist, als Reaktion darauf aufzuleuchten, dass der Energieversorgungsschnittstelle (118) von der Energieversorgungsschaltung (526) Energie bereitgestellt wird; und
wobei die zweite lichtemittierende Vorrichtung (130) dazu ausgelegt ist, als Reaktion darauf aufzuleuchten, dass der externen Energieausgangsschnittstelle (132) von der Energieversorgungsschaltung (526) Energie bereitgestellt wird.

2. Klebstoffabgabesystem (100) nach Anspruch 1, wobei die Klebstoffabgabevorrichtung (102) ferner umfasst:
eine Steuerschaltung; und
einen Temperatursensor (406), der mit der Steuerschaltung kommunikativ gekoppelt ist.

3. Klebstoffabgabesystem (100) nach Anspruch 2, wobei der Temperatursensor (406) dazu ausgelegt ist, eine Temperatur eines Heizelements (408) der Klebstoffabgabevorrichtung (102) zu erfassen und die erfasste Temperatur der Steuerschaltung zu kommunizieren.

4. Klebstoffabgabesystem (100) nach Anspruch 2, wobei die Steuerschaltung dazu ausgelegt ist, die erste lichtemittierende Vorrichtung (114) und/oder die zweite lichtemittierende Vorrichtung (130) als Reaktion darauf zu steuern, dass Temperaturdaten von dem Temperatursensor (406) empfangen werden.

5. Klebstoffabgabesystem (100) nach Anspruch 3, wobei die erste lichtemittierende Vorrichtung (114) und die zweite lichtemittierende Vorrichtung (130) mehrfarbige lichtemittierende Vorrichtungen sind.

6. Klebstoffabgabesystem (100) nach Anspruch 5, wobei die erste lichtemittierende Vorrichtung (114) als Reaktion auf eine erste erfasste Temperatur eine erste Farbe ausgibt.

7. Klebstoffabgabesystem (100) nach Anspruch 6, wobei die erste erfasste Temperatur weniger als 120 Grad Celsius beträgt.

8. Klebstoffabgabesystem (100) nach Anspruch 5, wobei die erste lichtemittierende Vorrichtung (114) eine zweite Farbe ausgibt, die eine zweite erfasste Temperatur angibt.

9. Klebstoffabgabesystem (100) nach Anspruch 7, wobei die zweite erfasste Temperatur in dem Bereich von 120 Grad Celsius bis 140 Grad Celsius liegt.

10. Klebstoffabgabesystem (100) nach Anspruch 1, wobei die erste lichtemittierende Vorrichtung (114) und die zweite lichtemittierende Vorrichtung (130) LEDs sind.

11. Verfahren zum Steuern einer oder mehrerer lichtemittierender Vorrichtungen (114, 130) in einem Klebstoffabgabesystem (100) nach einem der Ansprüche 1 bis 10, wobei das Verfahren umfasst:
elektrisches Koppeln einer Klebstoffabgabevorrichtung und einer Ladeeinrichtungsbasis (120);
Bestimmen eines Energieflusses zwischen einer externen Energieausgangsschnittstelle (132) der Ladeeinrichtungsbasis (120) und einer Energieversorgungsschnittstelle (118) der Klebstoffabgabevorrichtung (102); und
als Reaktion auf das Bestimmen des Energieflusses zwischen der externen Energieausgangsschnittstelle (132) und der Energieversorgungsschnittstelle (118) Aufleuchten einer ersten lichtemittierenden Vorrichtung (114), die mit der Klebstoffabgabevorrichtung (102) gekoppelt ist, und/oder einer zweiten lichtemittierenden Vorrichtung (130), die mit der Ladeeinrichtungsbasis (120) gekoppelt ist.

12. Verfahren nach Anspruch 11, wobei die Klebstoffabgabevorrichtung (102) einen Temperatursensor (406) aufweist, der mit einer Steuerschaltung der Klebstoffabgabevorrichtung (102) gekoppelt ist, wobei der Temperatursensor (406) dazu ausgelegt ist, eine Temperatur eines Heizelements (408) der Klebstoffabgabevorrichtung (102) zu erfassen.

13. Verfahren nach Anspruch 12, ferner umfassend Steuern einer Ausgabe der ersten lichtemittierenden Vorrichtung (114) und/oder der zweiten lichtemittierenden Vorrichtung (130) über die Steuerschaltung als Reaktion darauf, dass Temperaturdaten von dem Temperatursensor (406) empfangen werden.

14. Verfahren nach Anspruch 13, wobei die erste lichtemittierende Vorrichtung (114) und die zweite lichtemittierende Vorrichtung (130) mehrfarbige lichtemittierende Vorrichtungen sind.

15. Verfahren nach Anspruch 14, ferner umfassend Steuern entweder der ersten lichtemittierenden Vorrichtung (114) oder der zweiten lichtemittierenden Vorrichtung (130) über die Steuerschaltung, um Licht einer ersten Farbe auszugeben, um eine erste erfasste Temperatur anzugeben.

16. Verfahren nach Anspruch 15, wobei die erste Temperatur weniger als 120 Grad Celsius beträgt.

17. Verfahren nach Anspruch 14, ferner umfassend Steuern entweder der ersten lichtemittierenden Vorrichtung (114) oder der zweiten lichtemittierenden Vorrichtung (130) über die Steuerschaltung, um Licht einer zweiten Farbe auszugeben, um eine zweite erfasste Temperatur anzugeben.

18. Verfahren nach Anspruch 17, wobei die zweite erfasste Temperatur in dem Bereich von 120 Grad Celsius bis 140 Grad Celsius liegt.

19. Klebstoffabgabesystem (100) nach Anspruch 1, wobei die Klebstoffabgabevorrichtung (102) ferner umfasst:
eine Steuerschaltung, die dazu ausgelegt ist, die erste lichtemittierende Vorrichtung (114) zu steuern; und
wobei die externe Energieausgangsschnittstelle (132) dazu ausgelegt ist, elektrisch mit der Energieversorgungsschnittstelle (118) der Klebstoffabgabevorrichtung (102) zu koppeln, basierend darauf, dass die Klebstoffabgabevorrichtung (102) in der Schnittstelle (124) aufgenommen wird.

20. Klebstoffabgabesystem (100) nach Anspruch 19, wobei die Steuerschaltung dazu ausgelegt ist, der Ladeeinrichtungsbasis (120) einen Befehl zu kommunizieren, die zweite lichtemittierende Vorrichtung (130) aufleuchten zu lassen, als Reaktion darauf, dass der Energieversorgung Energie bereitgestellt wird.

## Revendications

1. Système de distribution d'adhésif (100) comprenant :
un dispositif de distribution d'adhésif (102) comprenant :
un premier dispositif électroluminescent (114) ;
une poignée (106) ;
une source d'énergie ; et
une interface d'alimentation électrique (118) ; **caractérisé en ce que** le système de distribution d'adhésif (100) comprend en outre :
une base de charge (120) comprenant :
un deuxième dispositif électroluminescent (130) ;
une interface (124) conçue pour recevoir le dispositif de distribution d'adhésif (102), l'interface (124) étant configurée pour s'accoupler à la poignée (106) ;
une interface de sortie d'alimentation électrique externe (132) configurée pour se coupler électriquement à l'interface d'alimentation électrique (118) du dispositif de distribution d'adhésif (102) ;
un circuit d'alimentation électrique (526) couplé à l'interface de sortie d'alimentation électrique externe (132) et configuré pour fournir de l'énergie électrique à l'interface de sortie d'alimentation électrique externe (132) ;
dans lequel le premier dispositif électroluminescent (114) est configuré pour s'illuminer en réponse à l'énergie électrique fournie à l'interface d'alimentation électrique (118) à partir du circuit d'alimentation électrique (526) ; et
dans lequel le deuxième dispositif électroluminescent (130) est configuré pour s'illuminer en réponse à l'énergie électrique fournie à partir du circuit d'alimentation électrique (526) à l'interface de sortie d'alimentation électrique externe (132).

2. Système de distribution d'adhésif (100) selon la revendication 1, dans lequel le dispositif de distribution d'adhésif (102) comprend en outre :
un circuit de commande ; et
un capteur de température (406) couplé en communication au circuit de commande.

3. Système de distribution d'adhésif (100) selon la revendication 2, dans lequel le capteur de température (406) est configuré pour détecter une température d'un élément chauffant (408) du dispositif de distribution d'adhésif (102) et pour communiquer la température détectée au circuit de commande.

4. Système de distribution d'adhésif (100) selon la revendication 2, dans lequel le circuit de commande est configuré pour commander au moins l'un parmi les premiers dispositifs électroluminescents (114) et les deuxièmes dispositifs électroluminescents (130) en réponse à la réception de données de température provenant du capteur de température (406).

5. Système de distribution d'adhésif (100) selon la revendication 3, dans lequel le premier dispositif électroluminescent (114) et le deuxième dispositif électroluminescent (130) sont des dispositifs électroluminescents multicolores.

6. Système de distribution d'adhésif (100) selon la revendication 5, dans lequel le premier dispositif électroluminescent (114) émet une première couleur en réponse à une première température détectée.

7. Système de distribution d'adhésif (100) selon la revendication 6, dans lequel la première température détectée est inférieure à 120 degrés Celsius.

8. Système de distribution d'adhésif (100) selon la revendication 5, dans lequel le premier dispositif électroluminescent (114) émet une deuxième couleur indiquant une deuxième température détectée.

9. Système de distribution d'adhésif (100) selon la revendication 7, dans lequel la deuxième température détectée est comprise dans la plage de 120 degrés Celsius à 140 degrés Celsius.

10. Système de distribution d'adhésif (100) selon la revendication 1, dans lequel le premier dispositif électroluminescent (114) et le deuxième dispositif électroluminescent (130) sont des diodes électroluminescentes.

11. Procédé de commande d'un ou de plusieurs dispositifs électroluminescents (114, 130) dans un système de distribution d'adhésif (100) selon l'une quelconque des revendications 1 à 10, le procédé comprenant :
le couplage électrique d'un dispositif de distribution d'adhésif et d'une base de charge (120) ;
la détermination d'un flux d'énergie électrique entre une interface de sortie d'alimentation électrique externe (132) de la base de charge (120) et une interface d'alimentation électrique (118) du dispositif de distribution d'adhésif (102) ; et
en réponse à la détermination d'un flux d'énergie électrique entre l'interface de sortie d'alimentation électrique externe (132) et l'interface d'alimentation électrique (118), l'illumination de l'un au moins parmi un premier dispositif électroluminescent (114) couplé au dispositif de distribution d'adhésif (102) et un deuxième dispositif électroluminescent (130) couplé à la base de charge (120).

12. Procédé selon la revendication 11, dans lequel le dispositif de distribution d'adhésif (102) comprend un capteur de température (406) couplé à un circuit de commande du dispositif de distribution d'adhésif (102), le capteur de température (406) étant configuré pour détecter une température d'un élément chauffant (408) du dispositif de distribution d'adhésif (102).

13. Procédé selon la revendication 12, comprenant en outre la commande, au moyen du circuit de commande, d'une sortie de l'un au moins parmi le premier dispositif électroluminescent (114) et le deuxième dispositif électroluminescent (130) en réponse à la réception de données de température provenant du capteur de température (406).

14. Procédé selon la revendication 13, dans lequel le premier dispositif électroluminescent (114) et le deuxième dispositif électroluminescent (130) sont des dispositifs électroluminescents multicolores.

15. Procédé selon la revendication 14, comprenant en outre la commande, par l'intermédiaire du circuit de commande, de l'un parmi le premier dispositif électroluminescent (114) et le deuxième dispositif électroluminescent (130) pour l'émission d'une lumière d'une première couleur destinée à indiquer une première température détectée.

16. Procédé selon la revendication 15, dans lequel la première température est inférieure à 120 degrés Celsius.

17. Procédé selon la revendication 14, comprenant en outre la commande, par l'intermédiaire du circuit de commande, de l'un parmi le premier dispositif électroluminescent (114) et le deuxième dispositif électroluminescent (130) pour l'émission d'une lumière d'une deuxième couleur destinée à indiquer une deuxième température détectée.

18. Procédé selon la revendication 17, dans lequel la deuxième température détectée est comprise dans la plage de 120 degrés Celsius à 140 degrés Celsius.

19. Système de distribution d'adhésif (100) selon la revendication 1, dans lequel
le dispositif de distribution d'adhésif (102) comprend en outre :
un circuit de commande configuré pour commander le premier dispositif électroluminescent (114) ; et
dans lequel l'interface de sortie d'alimentation électrique externe (132) est configurée pour se coupler électriquement à l'interface d'alimentation électrique (118) du dispositif de distribution d'adhésif (102) lors de la réception du dispositif de distribution d'adhésif (102) dans l'interface (124).

20. Système de distribution d'adhésif (100) selon la revendication 19, dans lequel le circuit de commande est configuré pour communiquer une instruction à la base de charge (120) afin d'illuminer le deuxième dispositif électroluminescent (130) en réponse à de l'énergie fournie à l'alimentation électrique.
